# EUROPEAN PATENT APPLICATION

(11) **EP 1 887 465 A1**
(43) Date of publication of application: **13.02.2008**
(21) Application number: 07251031.6
(22) Date of filing: 13.03.2007
(51) Int. Cl.: G06F 9/445

(54) **Storage apparatus and program update method**

(30) Priority: 31.07.2006 JP 2006209056
(71) Applicant: Hitachi, Ltd., Chiyoda-ku Tokyo 100-8280 (JP)
(72) Inventor: Hiwatashi, Junichi., Tokyo 100-8220 (JP); Abei, Hiroshi, Tokyo 100-8220 (JP)
(74) Representative: Hodsdon, Stephen James

(57) **Abstract**

The present invention can simplify the update work of a microprogram to reduce mistakes made by administrators during update work.

The present invention provides a storage apparatus (3) that executes processing based on a program, the storage apparatus including: a memory unit (13) that stores the program (31); a processing unit that executes processing according to the program stored in the memory unit; and a program update unit that updates the program to a new program according to an external instruction, wherein the program update unit selects one or more setting cancellation items from a plurality of items for which the settings can be cancelled for the update of the program; determines the order for executing the processing for cancelling the settings for the one or more setting cancellation items; and after cancelling the one or more setting cancellation items in the determined order, executes processing for replacing the program with the new program; and after the processing for replacing the program with the new program, re-sets the settings for the one or more setting cancellation items in inverse order of their cancellation.

## Description

This application relates to and claims priority from Japanese Patent Application No. 2006-209056, filed on July 31, 2006, the entire disclosure of which is incorporated herein by reference.

The invention relates to a storage apparatus and a program update method, and specifically, relates to one that is suited for use in a storage apparatus with a microprogram having different settings and limitations for every version installed.

Microprograms controlling storage apparatuses are improved or updated in response to the addition or update, etc., of the specifications requested by customers. A change of a microprogram in current use to a newer version is called a version upgrade of a microprogram, and a change of a microprogram in current use to an older version is called a version downgrade of a microprogram. Conventionally, the upgrade or downgrade of a microprogram is conducted by a storage apparatus administrator with reference to the manual.

Regarding the management of a program after a version upgrade or downgrade where there are various versions, JP-A-2005-258709 proposes automatically and appropriately managing various kinds of versions resulting from updates, improving program quality.

A microprogram has different settings, including available functions, and different limitations, including the number of logical volumes that can be defined, for every version. Therefore, if the settings for a microprogram in a storage apparatus are left unchanged when upgrading or downgrading it, trouble such as the settings for a function deleted in a new version microgram being left after the upgrade, or a number of logical volumes exceeding what can be managed by an older version being left defined after the downgrade. The occurrence of such trouble may have an adverse effect on the operation of the storage apparatus after the update of the microprogram.

Therefore, when a microprogram is updated (upgraded or downgraded) in a storage apparatus, it is generally necessary to cancel, in advance, the settings, such as functions provided or not provided depending on the version, from among various kinds of functions contained in the microprogram, or the settings for the limitations for the numerical values that vary depending on the version, and to re-set these after the microprogram update.

However, the above cancellation and re-setting of the settings and limitations is complicated work because it requires a combination of various tasks in response to the different versions of the microprogram. Also, it has a problem in that administrators conducting the setting cancellation and resetting tend to make mistakes.

The present invention has been made in light of the above points, and has an objective of providing a storage apparatus and a method for updating a program installed in the storage apparatus, that can simplify the update work of a microprogram to reduce the number of mistakes made by administrators during update work.

In order to preferably achieve the above objective, an aspect of the present invention provides a storage apparatus that executes processing based on a program, the storage apparatus including: a memory unit that stores the program; a processing unit that executes processing according to the program stored in the memory unit; and a program update unit that updates the program to a new program according to an external instruction, wherein the program update unit selects one or more setting cancellation items from a plurality of items for which the settings can be cancelled for the update of the program; determines the order for executing the processing for cancelling the settings for the one or more setting cancellation items; and after cancelling the one or more setting cancellation items in the determined order, executes processing for replacing the program with the new program; and after the processing for replacing the program with the new program, re-sets the settings for the one or more setting cancellation items in inverse order of their cancellation.

Accordingly, the storage apparatus makes it possible to eliminate the need for an administrator to, when updating a program, manually cancel the settings for setting cancellation items and re-set the settings for these items after the update of the program.

Another aspect of the present invention provides a program update method for updating a program in a storage apparatus that executes processing based on the program, the method comprising: a first step of selecting one or more setting cancellation items from a plurality of items for which the settings can be cancelled for the update of the program; a second step of determining the order for executing processing for cancelling the settings for the one or more setting cancellation items; a third step of cancelling the settings for the one or more setting cancellation items in the determined order; a fourth step of executing replacement processing for replacing the program with a new program; and a fifth step of, after executing the processing for replacing the program with the new program, re-setting the settings for the one or more setting cancellation items in inverse order of their cancellation.

Accordingly, this program update method makes it possible to eliminate the need for an administrator to, when updating a program, manually cancel the settings for setting cancellation items and re-set the settings for these items after the update of the program.

Aspects of the present invention make it possible to simplify the update work for microprograms, potentially reducing mistakes made by administrators during the update work.

Other aspects and advantages of the invention will be apparent from the following description and the appended claims.

### Brief Description of the Drawings

FIG. 1 is a block diagram showing a storage system 1 according to a first embodiment of the present invention.
FIG. 2 is a list of tables stored or created in shared memory 13 together with a new microprogram.
FIG. 3 is a conceptual diagram showing a PP (Program Product) version upgrade table 40 in a first setting and limitation matrix table group 32.
FIG. 4 is a conceptual diagram showing a PP version upgrade detail table 41 in the first setting and limitation matrix table group 32.
FIG. 5 is a conceptual diagram showing a PP version downgrade table 42 in the first setting and limitation matrix table group 32.
FIG. 6 is a conceptual diagram showing a PP version downgrade detail table 43 in the first setting and limitation matrix table group 32.
FIG. 7 is a conceptual diagram showing a SOM (System Option Mode) version upgrade table 44 in a second setting and limitation matrix table group 33.
FIG. 8 is a conceptual diagram showing a SOM version upgrade detail table 45 in the second setting and limitation matrix table group 33.
FIG. 9 is a conceptual diagram showing a SOM version downgrade table 46 in the second setting and limitation matrix table group 33.
FIG. 10 is a conceptual diagram showing a SOM version downgrade detail table 47 in the second setting and limitation matrix table group 33.
FIG. 11 is a conceptual diagram showing a HOST version upgrade table 48 in a third setting and limitation matrix table group 34.
FIG. 12 is a conceptual diagram showing a HOST version upgrade detail table 49 in the third setting and limitation matrix table group 34.
FIG. 13 is a conceptual diagram showing a HOST version downgrade table 50 in the third setting and limitation matrix table group 34.
FIG. 14 is a conceptual diagram showing a HOST version downgrade table 50 in the third setting and limitation matrix table group 34.
FIG. 15 is a conceptual diagram showing a configuration information check table 35.
FIG. 16 is a conceptual diagram showing a function cancellation criterion table 36.
FIG. 17 is a conceptual diagram showing a function cancellation procedure table 37.
FIG. 18 is a conceptual diagram showing a work procedure table 38.
FIG. 19 is a flowchart for explaining the processing for updating a microprogram according to the first embodiment.
FIG. 20 is a flowchart for specifically explaining the selection of configuration information items during the processing for updating a microprogram according to the first embodiment.
FIG. 21 is a block diagram showing a storage system 1 according to a second embodiment of the present invention.
FIG. 22 is a timing chart for explaining the processing for updating a microprogram according to the second embodiment.
FIG. 23 is a subroutine chart for explaining the processing for updating a microprogram according to the second embodiment.
FIG. 24 is a subroutine chart for explaining the processing for updating the second embodiment.

### (1) First embodiment

An embodiment of the present invention will be described below with reference to the drawings.

### (1-1) Overall configuration of a storage system according to the embodiment

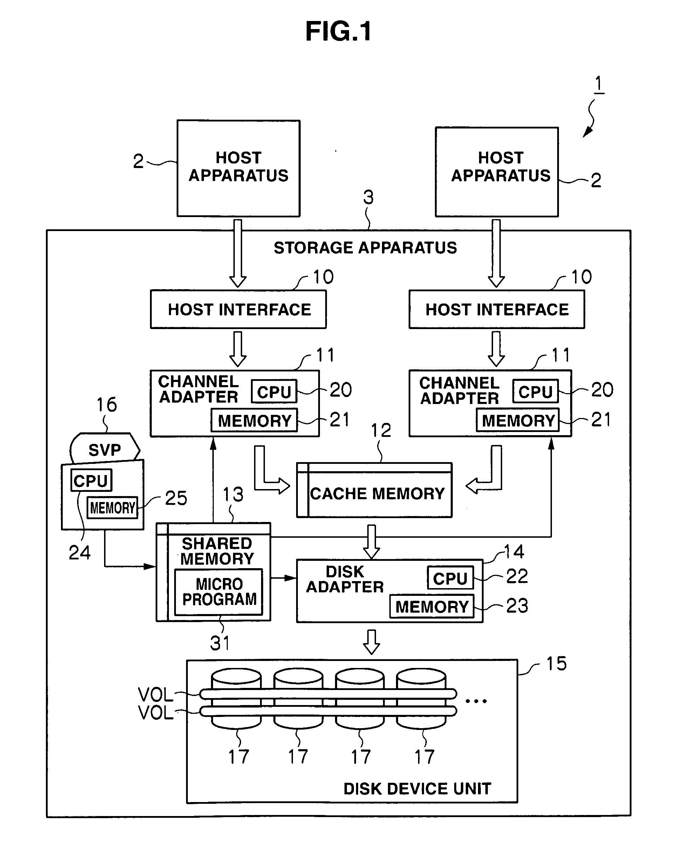

In FIG. 1, 1 denotes an entire storage system according to the embodiment. The storage system 1 includes multiple host apparatuses 2 and a storage apparatus 3 connected to each other.

The host apparatuses 2, which are higher-level apparatuses, are computer apparatuses, each including information processing resources such as a CPU (Central Processing Unit) or memory, etc., and may be personal computers, work stations, or mainframes, etc. Each host apparatus 2 also includes information input devices (not shown) such as a keyboard, a switch, a pointing device, or a microphone, and information output devices (not shown) such as a monitor display or a speaker.

The storage apparatus 3, as shown in FIG. 1, includes a plurality of host interfaces 10, a plurality of channel adapters 11, shared memory 13, cache memory 12, at least one disk adapter 14, a disk device unit 15 and a service processor (SVP) 16.

The host interfaces 10 may be host interface cards, such as SCSI cards, and are used as I/O adapters for connecting the host apparatus 2 to the storage apparatus 3.

Each channel adapter 11 is constructed as a microcomputer having information processing resources such as a CPU 20 and memory 21, etc. The memory 21 is used as work memory for the CPU 20. The CPU 20 executes various kinds of processing including data input/output processing, based on the later-described microprogram 31 kept in the shared memory 13.

The shared memory 13 and the cache memory 12 are memory shared by the channel adapters 11 and the disk adapter(s) 14. The shared memory 13 is mainly used for storing system configuration information, which is information relating to the storage apparatus 3 configuration, as well as keeping the microprogram 31. The cache memory 12 is mainly used for temporarily storing data input/output to/from the disk device unit 15.

Each disk adapter 14 is constructed as a microcomputer having a CPU 22 and memory 23, etc. The memory 23 is used as work memory for the CPU 22. The CPU 22 executes various kinds of processing including data input/output processing, based on the microprogram 31 kept in the shared memory 13.

The disk device unit 15 consists of a plurality of disk devices 17. The disk devices 17 may be expensive disks, such as SCSI (Small Computer System Interface) disks, or inexpensive disks, such as SATA (Serial AT Attachment) or optical disks.

These disk devices 17 are managed according to RAID (Redundant Arrays of Inexpensive Disks) methodology. One or more logical volumes VOL are defined over physical storage areas provided by one or more of the disk devices 17. Data from the host apparatuses 2 is stored in these logical volumes VOL in block units of a predetermined size (hereinafter referred to as "logical blocks").

Each logical volume VOL is assigned a volume number. In this embodiment, data is output/input designating an address, which is the combination of a volume number, and a unique number assigned to each block (hereinafter referred to as the "LBA [Logical Block Address]").

The service processor 16 is a terminal device for maintaining/managing the storage apparatus 3, and is constructed as a microcomputer system having information processing resources such as a CPU 24 and memory 25, etc. An administrator for the storage system 1 changes the settings for the RAID configuration or the ECC (Error Correcting Code) group configuration, e.g., the addition of disk devices 17 to the disk device unit 15, via the service processor 16.

### (1-2) Microprogram update function according to the embodiment

### (1-2-1) Overview of a microprogram update function and the table structures

Next, a microprogram update function provided in the storage apparatus 3 will be explained.

In this embodiment, in the storage apparatus 3, a new version of a microprogram 31 can be loaded to the shared memory 13 by mounting a CD-ROM (Compact Disk-Read Only Memory) 30 with the microprogram 31 recorded, in the service processor 16 and performing the relevant operation. From that time, the channel adapters 11 and the disk adapter(s) 14 in the storage apparatus 3 will execute various kinds of processing according to this new microprogram 31.

The storage apparatus 3 according to this embodiment is characterized in that it is provided with a microprogram update function that, upon the aforementioned update (version upgrade or downgrade) of the microprogram 31, cancels, in advance, the settings for the functions or limitations that may cause a failure as a result of the update of the microprogram 31, and re-sets the settings for those functions or limitations after the update of the microprogram 31, along with any new setting required as a result of the update of the microprogram 31.

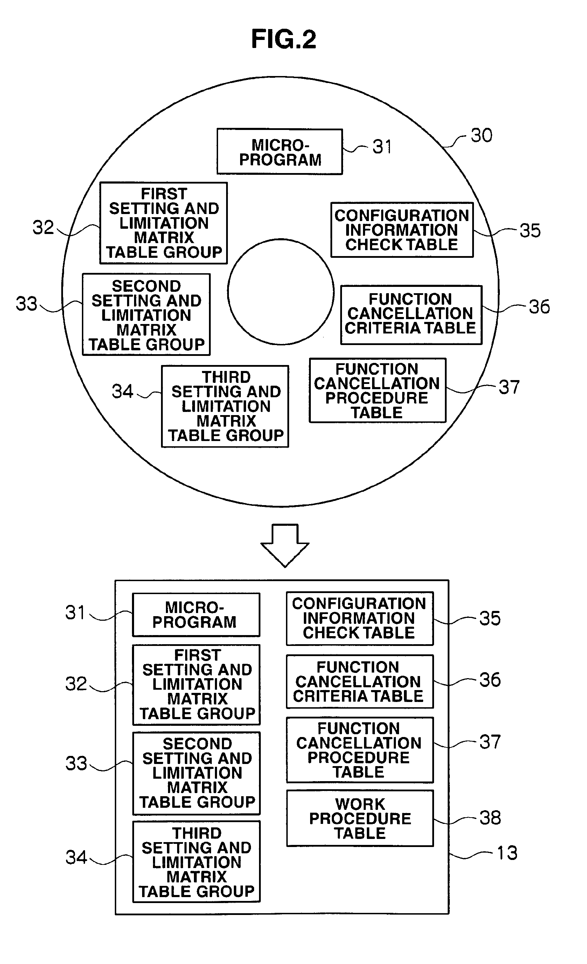

As a means for executing the aforementioned microprogram update function, as shown in FIG. 2, the CD-ROM 30 contains, besides the new microprogram 31, first to third setting and limitation matrix table groups 32 to 34, a configuration information check table 35, a function cancellation criterion table 36, and a function cancellation procedure table 37. The data for these tables is read out from the CD-ROM 30 together with the microprogram 31 and stored in the shared memory 13.

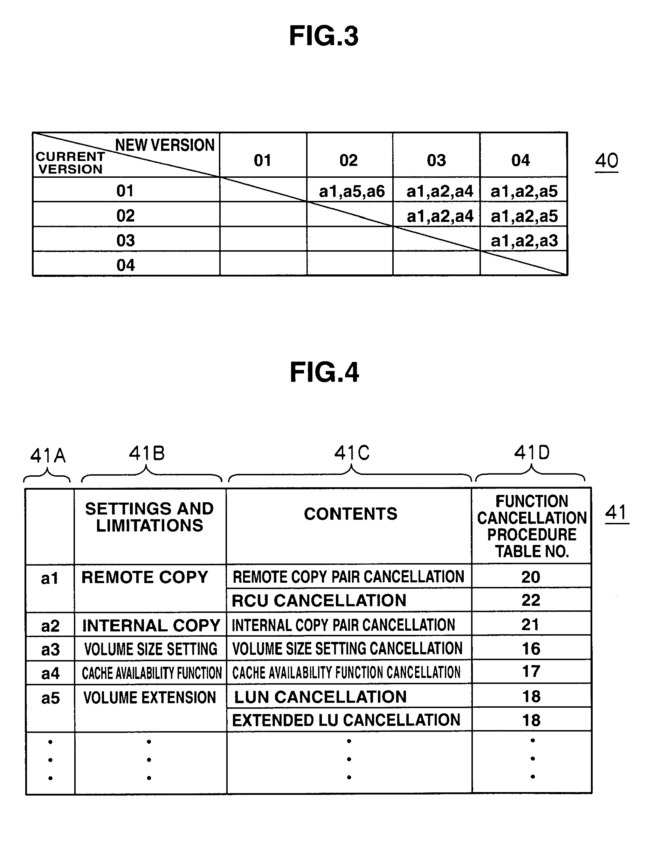

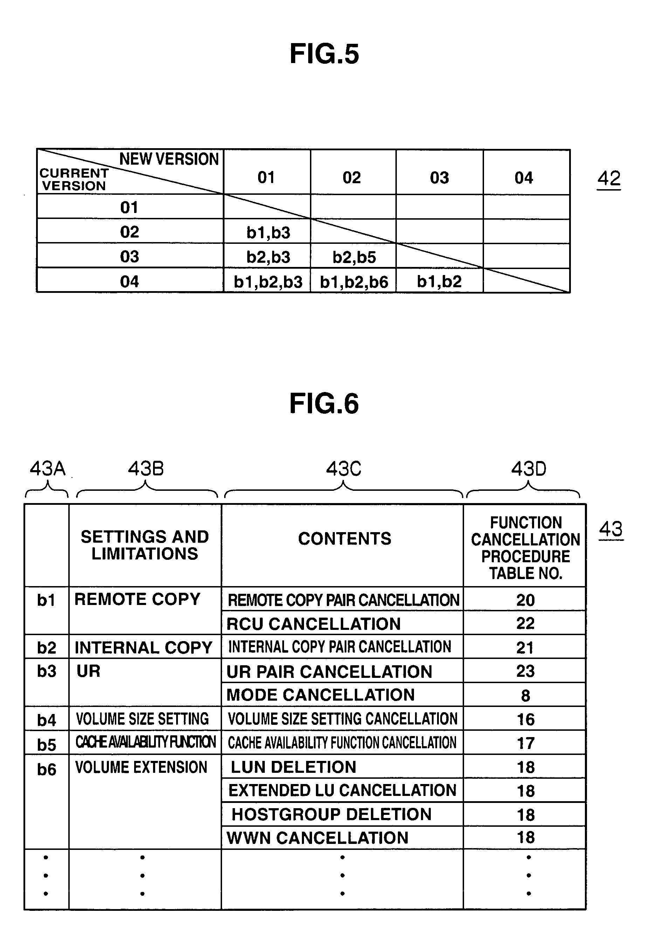

Here, the first setting and limitation matrix table group 32 is a group of tables used to specifically search for, from among the items for which the settings should be cancelled in advance when the microprogram is updated (hereinafter referred to as the "setting cancellation items"), optional function items (program products) for the storage apparatus 3, and as shown in FIGs. 3 to 6, includes a PP (Program Product) version upgrade table 40 (FIG. 3), a PP version upgrade detail table 41 (FIG. 4), a PP version downgrade table 42 (FIG. 5), and a PP version downgrade detail table 43 (FIG. 6).

The PP version upgrade table 40 is a table indicating the optional function-related setting cancellation items, for which the settings should be cancelled when the microprogram 31 is upgraded, in association with the relationship between the versions of the current microprogram 31 and the versions of a new microprogram 31.

More specifically, the PP version upgrade table 40 shows a current microprogram 31 version number in each row, and a new microprogram 31 version number in each column. Also, each field (hereinafter referred to as the "code number entry field") of the PP version upgrade table 40 where the rows and the columns intersect contains code numbers, which are assigned to the setting cancellation items for which the setting should be cancelled when the current microprogram 31 with the version number corresponding to each row is upgraded to the new microprogram with the version number corresponding each column.

Accordingly, the FIG. 3 example shows that when the version of the current microprogram 31 is "01" and that of new microprogram 31 is "03," three items provided with code numbers "a1" "a2" and "a4" exist as setting cancellation items, and the FIG. 3 example also shows that when the version of the current microprogram 31 is "04" and that of new microprogram 31 is "03," three items provided with code numbers "a1" "a2" and "a3" exist as setting cancellation items.

The PP version upgrade detail table 41 is a table indicating the specific content of the setting cancellation processing for each optional function-related setting cancellation item for which the settings should be cancelled in advance when the microprogram 31 is upgraded, and includes a "code number" column 41A, a "settings and limitations" column 41 B, a "content" column 41C, and a "function cancellation procedure table number" column 41 D.

The "code number" column 41A stores code numbers assigned to the corresponding setting cancellation items. The "settings and limitations" column 41 B stores settings and limitations, such as the functions that the current microprogram 31 should have, and the numerical values managed by the current microprogram 31, which are the then-current settings when cancelling the settings for the corresponding setting cancellation items. For example, FIG. 4 shows that the current microprogram 31 has the function "Remote Copy" as a then-current setting when cancelling the settings for the setting cancellation item "a1." Here, the "Remote Copy" refers to a remote copy function that performs remote copy of volumes (hereinafter referred to as the "operation volumes") used by users between the storage apparatus 3 and another storage apparatus 3 located at a remote place. FIG. 4 also shows that the current microprogram 31 has the function "Internal Copy" as a then-current setting when cancelling the settings for the setting cancellation item "a2." Here, the "Internal Copy" refers to a snapshot function that acquires a operation volume data image at a certain point in time.

The "content" column 41C of the version PP upgrade detail table 41 stores the specific content of the setting cancellation processing for the corresponding setting cancellation items. The FIG. 4 example shows that "remote copy pair cancellation" means that the correspondence between the copy source volumes (operation volumes) and the copy destination volumes should be cancelled in relation to the remote copy function. The "internal copy pair cancellation" means that the correspondence between the operation volumes and the volumes storing differential data required for restoring snapshots of these operation volumes (internal copy pair settings) should be cancelled in relation to the snapshot function.

The "function cancellation procedure table number" column 41 D stores the registration numbers for the corresponding setting cancellation items in the function cancellation procedure table 37 from among the setting cancellation items registered in the later-described function cancellation procedure table 37. For example, FIG. 4 shows that the setting cancellation processing called "remote copy pair cancellation" is provided with the registration number "20" in the function cancellation procedure table 37, and the setting cancellation processing called "internal copy pair cancellation" is provided with the registration number "21" in the function cancellation procedure table 37.

Meanwhile, the PP version downgrade table 42 is a table indicating the optional function-related setting cancellation items for which the settings should be cancelled when the microprogram 31 is downgraded, in association with the relationship between the current microprogram 31 versions and the new microprogram 31 versions. This PP version downgrade table 42 has the same structure as the PP version upgrade table 40, so its detailed explanation will be omitted.

The PP version downgrade detail table 43 is a table for indicating the specific content of each optional function-related setting cancellation item for which the settings should be cancelled when the microprogram 31 is downgraded. The PP version downgrade detail table 43 has the same structure as the PP version upgrade detail table 41, so its detailed explanation will be omitted.

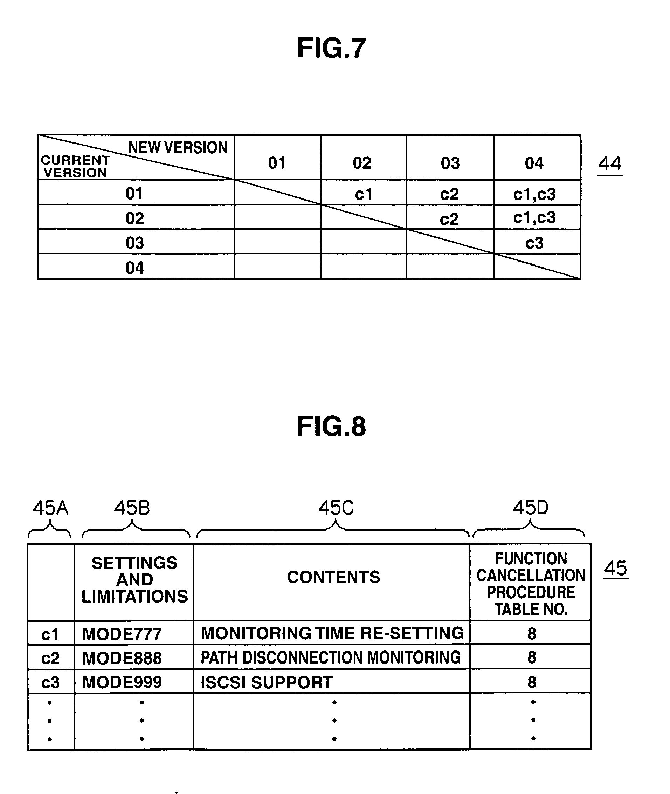

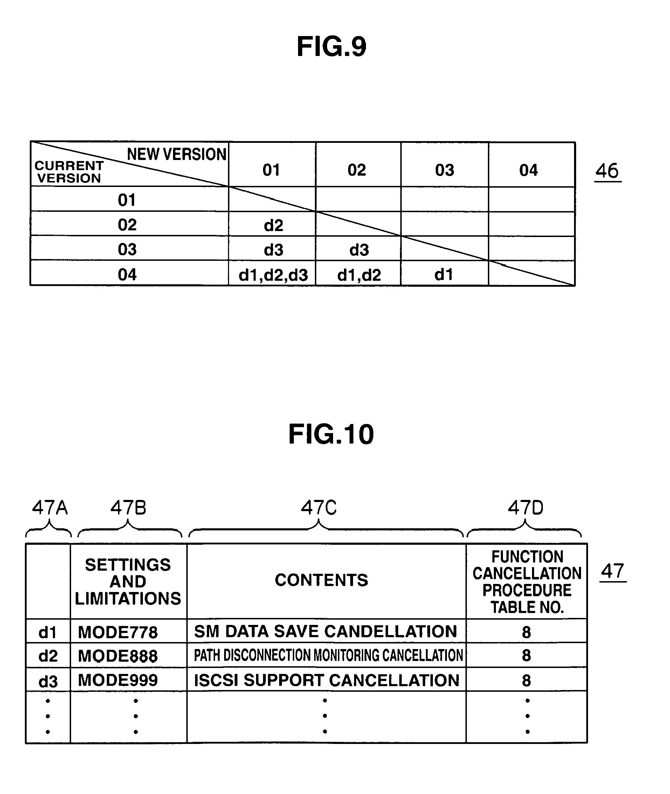

The second setting and limitation matrix table group 33 is a group of tables for specifically searching for system option modes items for the storage apparatus 3, i.e., items for performance improvement for the storage apparatus 3 or the customer-requested functions from among the setting cancellation items, and as shown in FIGs. 7 to 10, includes an SOM (System Option Mode) version upgrade table 44 (FIG. 7), an SOM version upgrade detail table 45 (FIG. 8), an SOM version downgrade table 46 (FIG. 9), and an SOM version downgrade detail table 47 (FIG. 10).

The SOM version upgrade table 44 is a table indicating the system option function-related setting cancellation items, in association with the relationship between the versions of the current microprogram 31 and the versions of the new microprogram 31, and has the same structure as the PP version upgrade table 40.

Accordingly, the FIG. 7 example shows that when the version of the current microprogram 31 is "01," and the version of the new microprogram 31 is "03," an item provided with code number "c2" exists as a setting cancellation item, and when the version of the current microprogram 31 is "03" and the version of the new microprogram 31 is "04," an item provided with code number "c3" exists as a setting cancellation item.

The SOM version upgrade detail table 45 is a table indicating the specific content of the setting cancellation processing for each system option mode function-related setting cancellation item, and has the same structure as the PP version upgrade detail table 41.

Accordingly, the FIG. 8 example shows that for the setting cancellation item assigned code number "c1," the current microprogram 31 having the system option mode function with the code number "MODE777" is a then-current setting when cancelling the settings for that setting cancellation item, and the specific content of the setting cancellation processing for the setting cancellation item is changing the settings for the system, etc., and then resetting of the monitoring time for confirming the content of the settings ("monitoring time resetting"), and also shows that this setting cancellation processing corresponds to the item with the registration number "8" in the function cancellation procedure table 37.

Meanwhile, the SOM version downgrade table 46 is a table indicating the system option function-related setting cancellation items, in association with the relationship between the versions of the current microprogram 31 and the versions of the new microprogram 31. This SOM version downgrade table 46 has the same structure as the PP version upgrade table 40, so its detailed explanation will be omitted.

The SOM version downgrade detail table 47 is a table indicating the specific content of the setting cancellation processing for each system option mode function-related setting cancellation item. The SOM version downgrade detail table 47 also has the same structure as the SOM version upgrade detail table 45, so its specific explanation will be omitted.

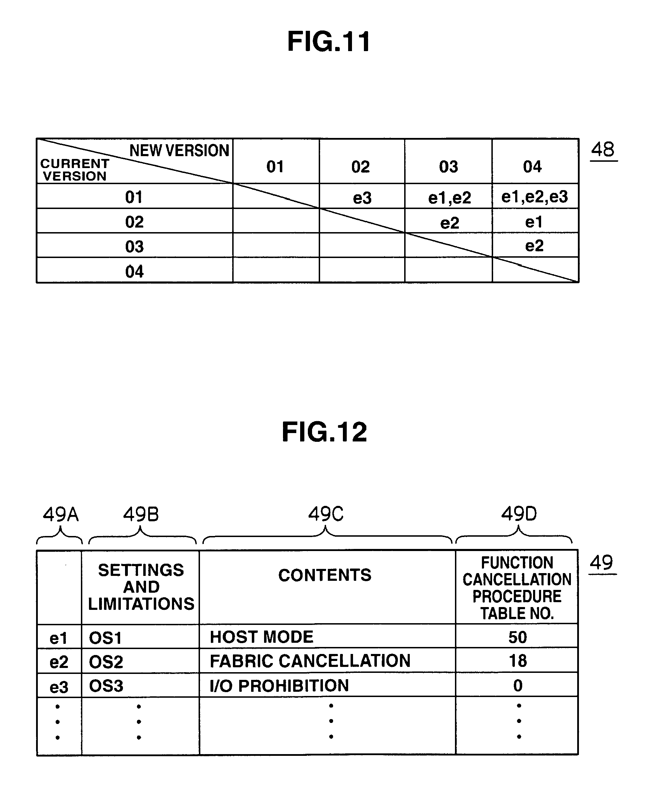

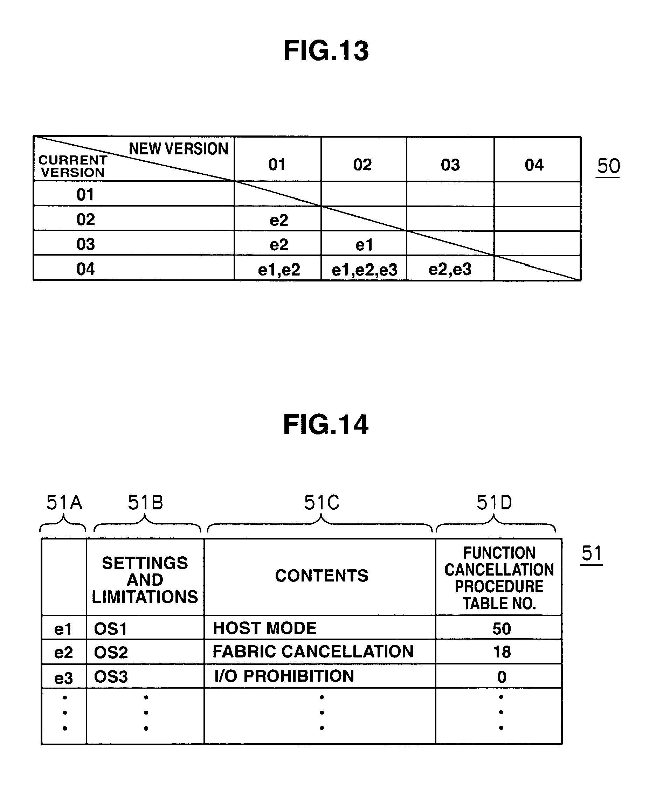

The third setting and limitation matrix table group 34 is a group of tables used to specifically search for the items limited by the types of host apparatus 2 connected to the storage apparatus 3 from among the setting cancellation items, and as shown in FIGs. 11 to 14, includes a HOST version upgrade table 48 (FIG. 11), a HOST version upgrade detail table 49 (FIG. 12), a HOST version downgrade table 50 (FIG. 13) and a HOST version downgrade detail table 51 (FIG. 14).

The HOST version upgrade table 48 is a table indicating the host apparatus 2-related setting cancellation items, in association with the relationship between the current microprogram 31 versions and the new microprogram 31 versions, and has the same structure as the PP version upgrade table 40.

Accordingly, the FIG. 11 example shows that when the current microprogram 31 version is "01" and the new microprogram 31 version is "03," the items provided with code numbers "e1" and "e2" exist as setting cancellation items, and that when the current microprogram 31 version is "03" and the new microprogram 31 version is "04," an item provided with code number "e2" exists as a setting cancellation item.

The HOST version upgrade detail table 49 is a table indicating the specific content of the setting cancellation processing for the host apparatus 2-related setting cancellation items, and it has the same structure as the PP version upgrade detail table 41.

Accordingly, the FIG. 12 example shows that for the setting cancellation item assigned code number "e1," a host apparatus 2 with the type "OS1" being connected to the storage apparatus 3 is a then-current setting when cancelling that setting cancellation item; that the specific content of the setting cancellation processing for that setting cancellation item is changing the mode of the host apparatus(es) 2 that are based on the operating system that manages the entire computer system; and that this setting cancellation processing corresponds to the item with registration number "50" in the function cancellation procedure table 37.

The HOST version downgrade table 50 is a table indicating the host apparatus 2-related setting cancellation items, in association with the relationship between the current microprogram 31 versions and the new microprogram 31 versions. This HOST version downgrade table 50 has the same structure as the HOST version upgrade table 48, so its detailed explanation will be omitted.

The HOST version downgrade detail table 51 is a table indicating the specific content of the setting cancellation processing for each host apparatus 2-related setting cancellation item. This HOST version downgrade detail table 51 has the same structure as the HOST version upgrade detail table 49, so its detailed explanation will be omitted.

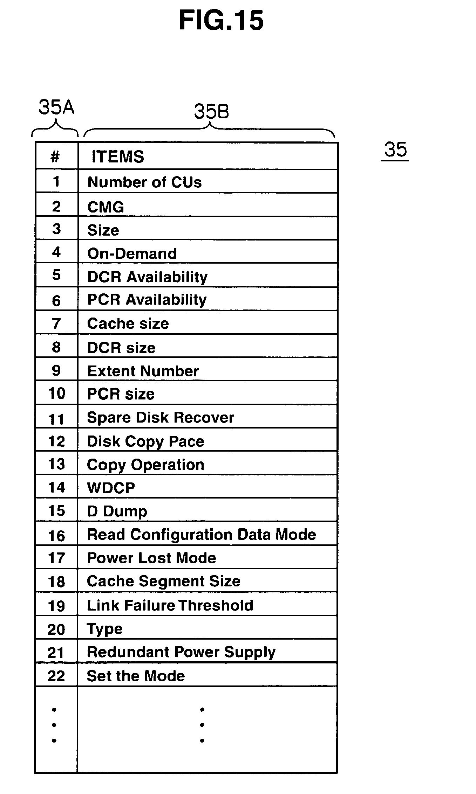

The configuration information check table 35 is a table for the service processor 16 to check the settings and limitations, the settings for which should be cancelled at its own storage apparatus 3 in advance when the microprogram 31 is updated. This configuration information check table 35 contains multiple setting and limitation items, including the setting cancellation items contained in the aforementioned first to third setting and limitation matrix table groups 32 to 34, such as limitations like "the number of logical units (Number of CUs) in the storage apparatus 3," which has a different manageable upper limit value depending on the version of the microprogram 31, and "cache memory group size (CMG)", which has a different numerical value depending on the version of the microprogram 31, and the settings like "On-Demand function" and "Cache Available function," which are provided or not provided depending on the version of the microprogram 31, as shown in FIG. 15.

The function cancellation criteria table 36 is a table for indicating specific criteria for cancelling the settings for each item (setting or limitation) registered in the configuration information check table 35, and includes an "items" column 36A and a "criteria" column 36B.

The "items" column 36A includes the aforementioned items (settings and limitations) registered in the configuration information check table 35, and the "conditions" column 36B includes the specific criteria for cancelling the settings for, or deleting the numerical values for, the corresponding items.

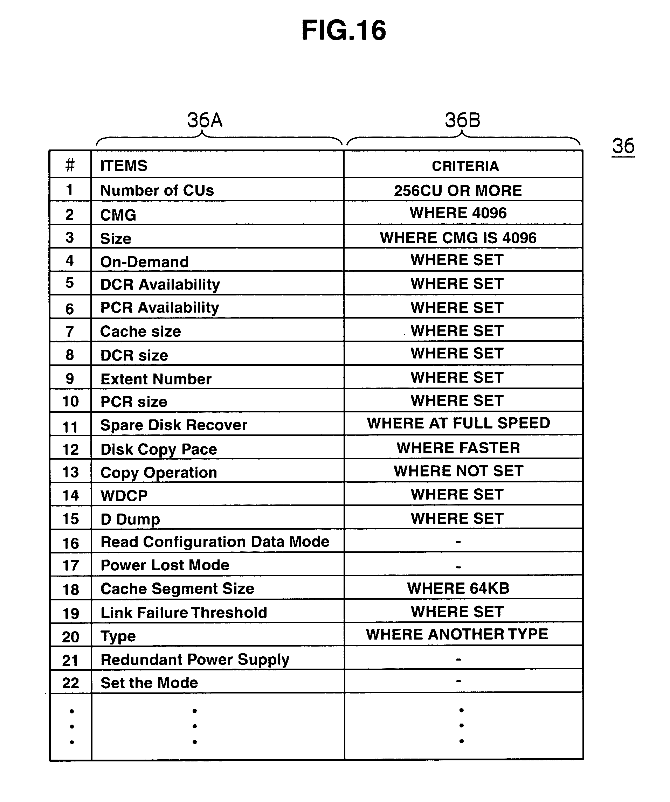

The FIG. 16 example shows that when the numeral value in the "number of logical units in the storage apparatus 3 (Number of CUs)" is "256" or more, that value will be deleted from the system configuration information stored in the shared memory 13; and that when the numerical value in the "cache memory group size (CMG)" is "4096" or more, that numerical value will be deleted from the system configuration information. The FIG. 16 example also shows that when the "on-demand" function or the "cache (DCR) availability" function are set, those functions will be cancelled.

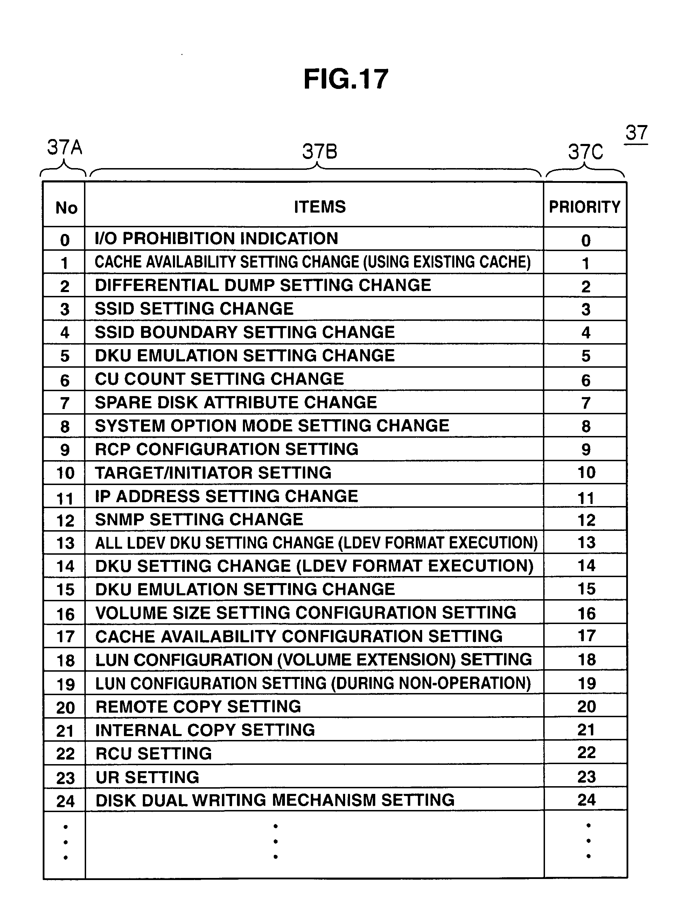

The function cancellation procedure table 37 is a table for indicating the order according to which the setting cancellation items listed in the configuration check table 35 should be cancelled (or deleted from the system configuration information) when the microprogram 31 is updated, and as shown in FIG. 17, includes the "no." column 37A, the "items" column 37B, and the "priority" column 37C.

The "no." column 37A stores the registration numbers for the setting cancellation items in the function cancellation procedure table 37, the "items" column 37B stores the content of the corresponding setting cancellation items, and the "order" column 37C stores the priority for the corresponding setting cancellation items. When the settings for some of the setting cancellation items are to be cancelled, cancelling the settings for these setting cancellation items according to the priority makes it possible to cancel the settings for each of these setting cancellation items without any failure arising.

Accordingly, the FIG. 17 example shows that the priority for the setting cancellation items "I/O prohibition indication (No. 0)" "remote copy setting (No. 20)" and "system option mode setting (No. 8)" are "0," "20," and "8," respectively, so if the settings for these setting cancellation items are cancelled, it is necessary to cancel the settings in the order of "I/O prohibition indication (No. 0)," "system optional mode setting (No. 8)," and "remote copy setting (No. 20)."

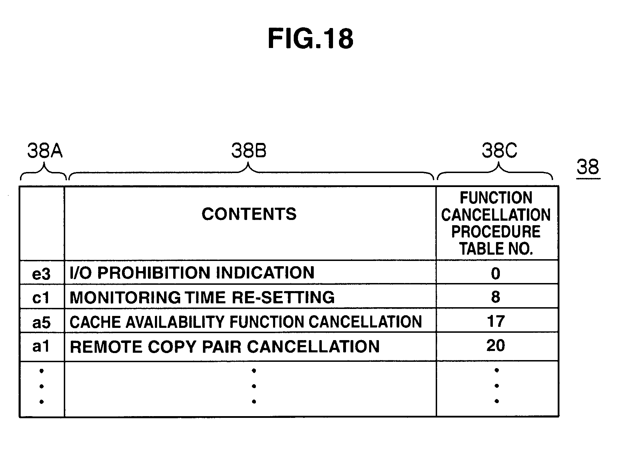

FIG. 18 shows the work procedure table 38. The work procedure table 38 is a table used to, after the service processor 16 chooses the setting cancellation items based on the first to third setting and limitation matrix table groups 32 to 34, the configuration information check table 35 and the function cancellation criteria table 36 when the microprogram 31 for the channel adapters 11 and the disk adapter(s) 14 is updated, determine the order for performing the setting cancellation processing for the chosen setting cancellation items, based on the function cancellation procedure table 37.

The work procedure table 38 includes the "code number" column 38A, the "content" column 38B, and the "functional cancellation procedure table number" column 38C. The "code number" column 38A stores code numbers provided to the corresponding setting cancellation items. The "content" column 38B stores the specific content of setting cancellation processing for the corresponding setting cancellation items. The "function cancellation procedure table number" column 38C stores the priority of the corresponding setting cancellation items listed in the function cancellation procedure table 37. In the work procedure table 38, the specific content of the setting cancellation processing for the corresponding cancellation items is registered in the aforementioned priority.

Accordingly, the FIG. 18 example shows that the setting cancellation processing, "I/O prohibition indication," "monitoring time re-setting," "cache availability function cancellation" and "remote copy pair cancellation," should be performed when the microprogram is updated, and that the processing for these items will be executed in that order.

### (1-2-2) Microprogram update processing

Next, the specific content of processing performed by the service processor 16 in relation to the microprogram update function will be explained.

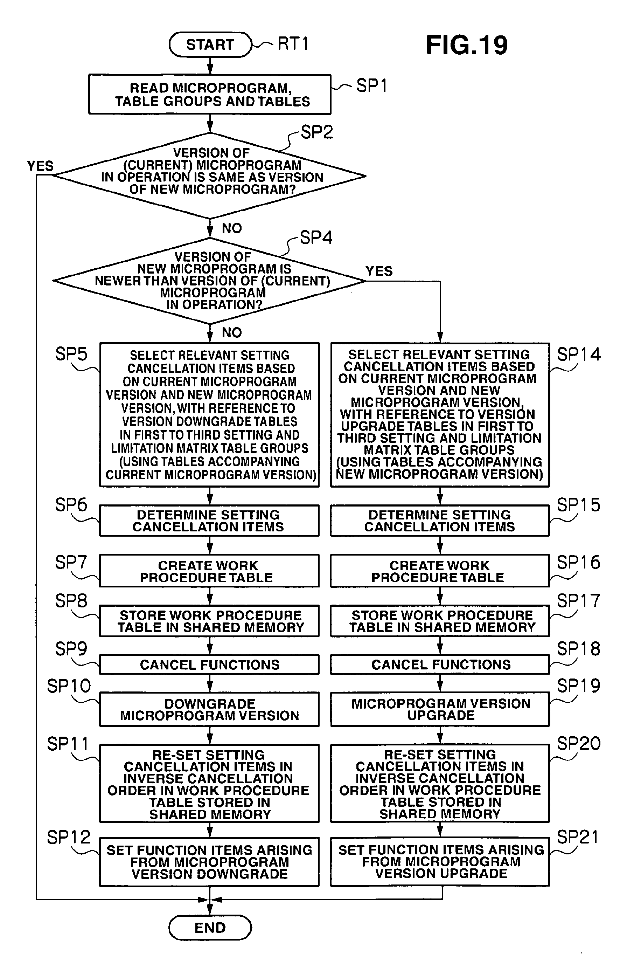

FIG. 19 is a flowchart showing the content of processing performed by the CPU 24 in the service processor 16 in relation to the processing for updating the microprogram 31 for the channel adapters 11 and the disk adapter(s) 14.

When a CD-ROM 30 with a new microprogram 31 recorded is mounted in the service processor 16 by an administrator of the storage apparatus 3, and a command to load the microprogram 31 recorded in the CD-ROM 30 is given via the service processor 16, the CPU 24 starts the microprogram update processing, reads the microprogram 31 and the above tables recorded together with the microprogram 31 from the CD-ROM 30, and stores them in the shared memory 13 (SP1).

The CPU 24 then judges whether or not the version of the current microprogram 31 and the version of the new microprogram 31 loaded in the shared memory 13 are the same (SP2), and upon an affirmative result, terminates this microprogram update processing.

Meanwhile, the CPU 24, upon a negative result, judges whether or not the version of the new microprogram 31 is newer than the version of the current microprogram 31 (SP4), and upon an affirmative result, chooses the items for which the settings should be cancelled in advance when the current microprogram 31 is upgraded to the new microprogram 31, based on the first to third setting and limitation matrix table groups 32 to 34 stored in the shared memory 13 (SP14). At this time, the CPU 24 uses the tables accompanying the new microprogram 31, i.e., those read from the CD-ROM 30 together with the new microprogram 31, as upgraded versions of the first to third setting and limitation matrix table groups 32 to 34.

The CPU 24 selects the items for which the settings should be cancelled, based on the function cancellation criteria table 36 read from the CD-ROM 30 together with the new microprogram 31, in addition to the items chosen at step SP14 (SP15).

Subsequently, the CPU 24 creates a work procedure table 38 with all the setting cancellation items for which the settings need to be cancelled registered, based on the selection at SP14 and SP15, and the function cancellation procedure table 37 read from the CR-ROM 30 together with the new microprogram 31 (SP16), and then stores the created work procedure table 38 in the shared memory 13 in the storage apparatus 3 (SP17).

Next, the CPU 24 performs the setting cancellation processing for cancelling each of the setting cancellation items registered in the work procedure table 38 (SP18). For example, if a setting cancellation item is set to "valid" in the system configuration information stored in the shared memory 13, the CPU 24 changes the setting for that setting cancellation item to "invalid." If the content of a setting cancellation item is a numerical value stored in the system configuration information, the CPU 24 deletes that numerical value.

Then the CPU 24 sets the relevant channel adapters 11 and/or the disk adapter(s) 14 to use the new microprogram 31 from that time on by controlling those channel adapters 11 and the disk adapter(s) 14 (SP19). Thus, the microprogram 31 is upgraded.

Next, the CPU 24 re-sets the settings for all the setting cancellation items for which the settings should be set also in the new microprogram 31 version from among the setting cancellation items registered in the work procedure table 38 stored in the shared memory 13, in inverse cancellation order (SP20).

The CPU 24 also performs the setting processing for new function items accompanying the upgrade of the microprogram 31 (SP21), and then terminates the microprogram update processing.

Meanwhile, the CPU 24, upon a negative result in the judgment at step SP4, chooses the setting cancellation items for which the settings should be cancelled in advance when the current microprogram 31 is downgraded to the new microprogram 31, based on the first to third setting and limitation matrix table groups 32 to 34 (SP5). At this time, the CPU 24 uses the tables accompanying the new microprogram 31, i.e., those read from the CD-ROM 30 together with the new microprogram 31, as upgraded versions of the first to third setting and limitation matrix table groups 32 to 34.

The CPU 24 selects the items for which the settings should be cancelled, based on the function cancellation criteria table 36 read from the CD-ROM 30 together with the new microprogram 31, in addition to the items chosen at step SP14 (SP6).

Subsequently, the CPU 24 creates a work procedure table 38 with all the setting cancellation items registered, based on the selection at SP14 and SP15, and the function cancellation procedure table 37 read from the CR-ROM 30 together with the new microprogram 31 (SP7), and then stores the created work procedure table 38 in the shared memory 13 in the storage apparatus 3 (SP8).

Next, the CPU 24 performs the setting cancellation processing for cancelling each of the setting cancellation items registered in the work procedure table 38 (SP9). For example, if a setting cancellation item is set to "valid" in the system configuration information stored in the shared memory 13, the CPU 24 changes the setting for that setting cancellation item to "invalid." If the content of a setting cancellation item is a numerical value stored in the system configuration information, the CPU 24 deletes that numerical value.

Then the CPU 24 sets the relevant channel adapters 11 and/or the disk adapter(s) 14 to use the new microprogram 31 from that time on by controlling those channel adapters 11 and the disk adapter(s) 14 (SP10). Thus, the microprogram 31 is downgraded.

Next, the CPU 24 re-sets the settings for all the setting cancellation items for which the settings should be set also in the new microprogram 31 version from among the setting cancellation items registered in the work procedure table 38 stored in the shared memory 13, in inverse cancellation order (SP11).

The CPU 24 also performs the setting processing for new function items accompanying the downgrade of the microprogram 31 (SP12), and then terminates the microprogram update processing.

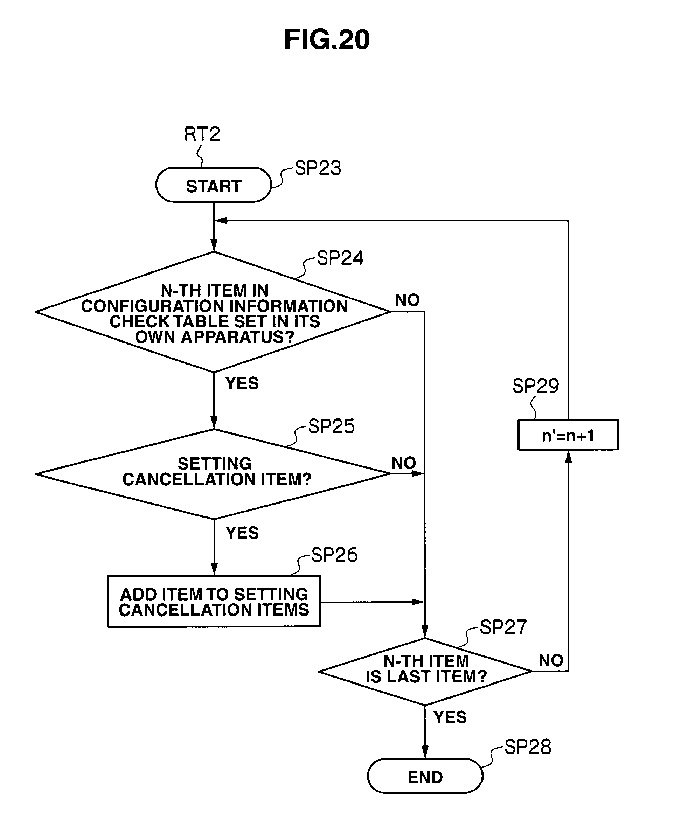

FIG. 20 is a flowchart showing the specific content of processing performed by the CPU 24 in relation to the processing for selecting the setting cancellation items at step SP6 or step SP15 in the microprogram update processing.

The CPU 24, upon proceeding to step SP6 or SP15 in the microprogram update processing, starts the setting cancellation item selection processing shown in FIG. 20 (SP23), and first, judges whether or not the n-th item ("1" at the initial stage) in the configuration information check table 35 is set in its own storage apparatus 3 (SP24).

The CPU 24, upon a negative result, proceeds to step SP27. Meanwhile, upon an affirmative result, it judges whether or not the item is a setting cancellation item (SP25). The CPU 24, upon a negative result in this judgment, proceeds to step SP27, and meanwhile, upon an affirmative result, adds that item to the setting cancellation items (SP26), and then checks whether or not the current target item is the last item in the configuration information check table 35 (SP27).

The CPU 24, upon a negative result in this judgment, moves the target item to the next item in the configuration information check table 35 (SP29), and repeats the same processing for that item. The CPU 24, upon completion of the same processing for all the items in the configuration information check table 35, terminates the setting cancellation item determination processing (SP28).

### (1-4) Effect of the embodiment

As described above, in the storage system 1 according to this embodiment, when the microprogram 31 for the channel adapters 11 and disk adapter(s) 14 is updated, the settings for the setting cancellation items that may cause a failure as a result of the microprogram 31 update are cancelled in advance, and these settings and limitations are re-set after the microprogram 31 update, eliminating the need for an administrator to manually perform the above operations. Accordingly, the processing for updating the microprogram 31 becomes easier, and operation mistakes arising from the microprogram 31 update can be reliably prevented.

### (2) Second embodiment

### (2-1) Overall configuration of the storage system according to the second embodiment

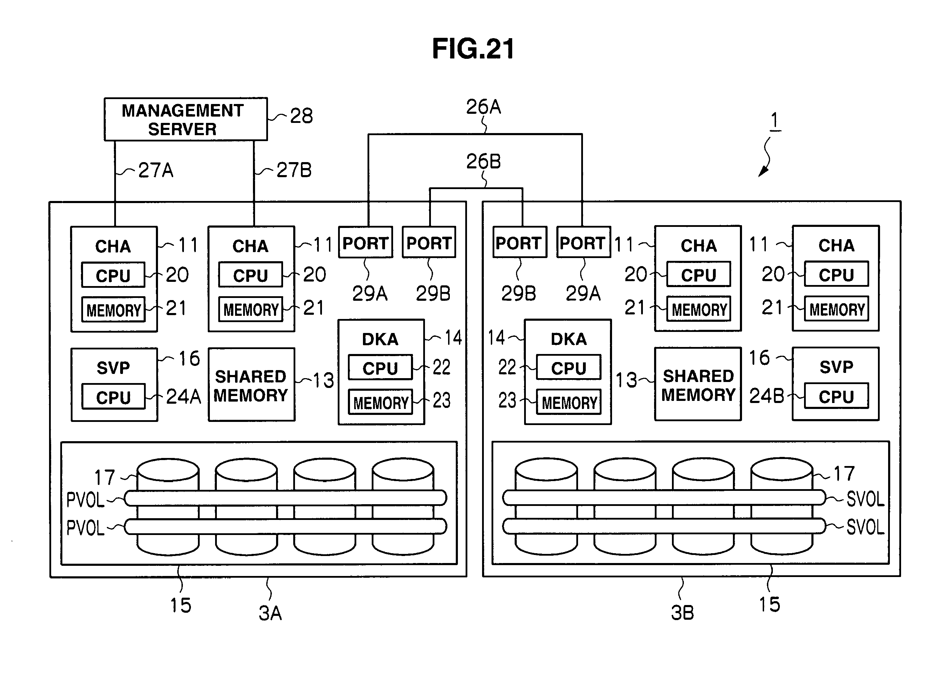

FIG. 21, where the same reference numerals shown in FIG. 1 are provided to the components corresponding to those in FIG. 1, shows a storage system according to the second embodiment. In the storage system 1, a first storage apparatus 3A is connected to a management server 28 via a network or the like (not shown), and the first storage apparatus 3A is connected to a second storage apparatus 3B.

The management server 28 is a computer apparatus including information processing resources, such as a CPU and memory, etc., (not shown), and may be a personal computer, a work station or a mainframe. The service processor 28 is used for monitoring/managing the first storage apparatus 3A and the second storage apparatus 3B.

The first storage apparatus 3A includes a plurality of host interfaces (not shown), a plurality of channel adapters 11, cache memory (not shown), shared memory 13, at least one disk adapter 14, a disk device unit 15, a service processor 16, and a plurality of ports 29. The first storage apparatus 3A provides host apparatuses 2 (not shown) with logical volumes (hereinafter referred to as "primary volumes") defined over the storage areas the disk device unit 15 has.

The second storage apparatus 3B also includes a plurality of host interfaces (not shown), a plurality of channel adapters 11, cache memory (not shown), shared memory 13, at least one disk adapter 14, a disk device unit 15, a service processor 16, and a plurality of ports 29. The second storage apparatus 3B provides the first storage apparatuses 3A with logical volumes (hereinafter referred to as "secondary volumes") defined over the storage areas the disk device unit 15 has.

The first storage apparatus 3A and the second storage apparatus 3B are connected by connecting their first ports 29A via a first path 26A and also connecting their second ports 29B via a second path 26B, with each of the first path 29A and the second path 26B consisting of a cable or similar. This storage system 1 configuration makes it possible to copy data written by a host apparatus (not shown) to a primary volume in the first storage apparatus 3A to the corresponding secondary volume in the second storage apparatus 3B via the first path 26A or the second path 26B.

### (2-2) Microprogram update processing

Next, the microprogram update function provided with the storage system 1 according to the second embodiment will be explained.

One of the characteristics of the storage system according to this embodiment is that, when the microprogram 31 for the channel adapters 11 and the disk adapter(s) 14 in the first storage apparatus 3A is updated during remote copy being conducted between the first storage apparatus 3A and the second storage apparatus 3B, the microprogram 31 for the channel adapters 11 and the disk adapter(s) 14 in the second storage apparatus 3B is also updated in line with the update of the microprogram 31 in the first storage apparatus 3A.

Another characteristic of the storage system 1 is that it is provided with a function that, when the microprogram 31 in the second storage apparatus 3B is updated in association with the update of the microprogram 31 in the first storage apparatus 3A, if the first storage apparatus 3A and the second apparatus 3B are connected via multiple paths, like in FIG. 21, for example, updates the microprogram 31 for the channel adapters 11 and the disk adapter(s) 14 in each of the first storage apparatus 3A and the second storage apparatus 3B via one of the paths while conducting remote copy with another path.

At that time, in the storage system 1, the path conducting the remote copy is sequentially switched to another path, making it possible to update the microprogram 31 for the channel adapters 11 and the disk adapter(s) 14 in each of the first storage apparatus 3A and the second storage apparatus 3B without the remote copy being interrupted.

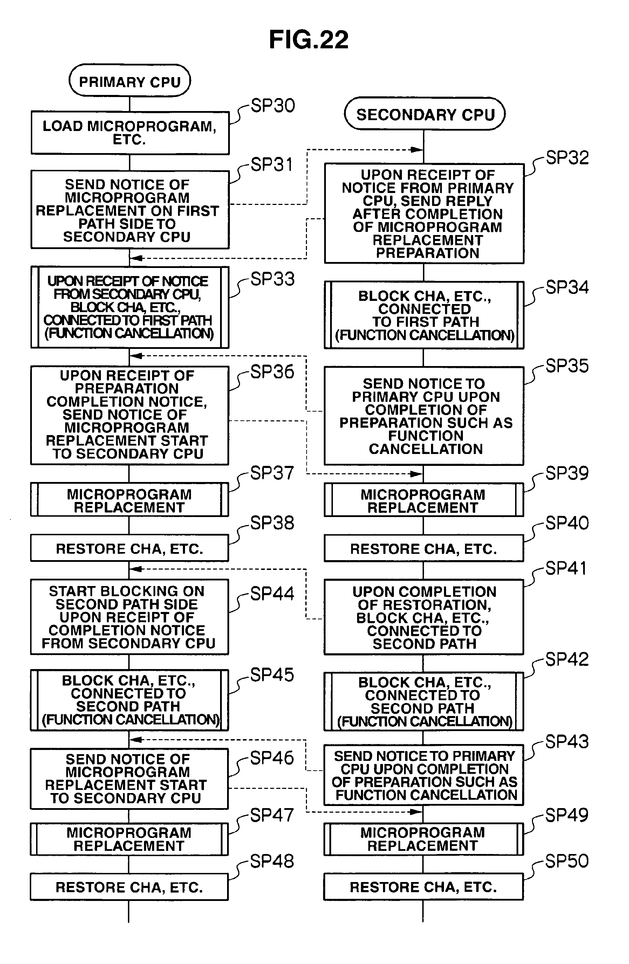

FIG. 22 is a timing chart showing the content of the processing performed by the service processor 16's CPU 24A (hereinafter referred to as the "primary CPU") in the first storage apparatus 3A and the service processor 16's CPU 24B (hereinafter referred to as the "secondary CPU") in the second storage apparatus 3B in relation to the microprogram update function according to the second embodiment.

Upon a CD-ROM 30 with a new microprogram 31 recorded being mounted by an administrator of the storage apparatuses 3A and 3B in the service processor 16 in the first storage apparatus 3A and a command to load the microprogram recorded in the CD-ROM 30 being given via the service processor 16 while remote copy is being conducted between the first storage apparatus 3A and the second storage apparatus 3B, the primary CPU 24A starts the microprogram update processing according to the second embodiment. The primary CPU 24A reads the microprogram 31 and the tables 31 to 37 recorded together with the microprogram 31 from the CD-ROM 30 and stores them in the shared memory 31 (SP30).

Then the primary CPU 24 sends a notice of the update of the microprogram 31 for the channel adapters 11 and the disk adapter(s) 14 connected to the first path 26A in the first storage apparatus 3A (hereinafter referred to as the "microprogram update notice") to the secondary CPU 24B (SP31). The primary CPU 24A then blocks the channel adapters 11 and the disk adapter(s) 14 in the first storage apparatus 3A connected to the first path 26A to cancel the functions of the channel adapter 11 and disk adapter(s) 14 (SP33).

Meanwhile, the secondary CPU 24B, upon receipt of the microprogram update notice from the primary CPU 24A, starts predetermined preparation such as the search for its channel adapters 11 and the disk adapter(s) 14 connected to the first path 26A. The secondary CPU 24B, upon completion of the preparation, sends a notice of completion (hereinafter referred to as the "first preparation completion notice") to the primary CPU24A (SP32).

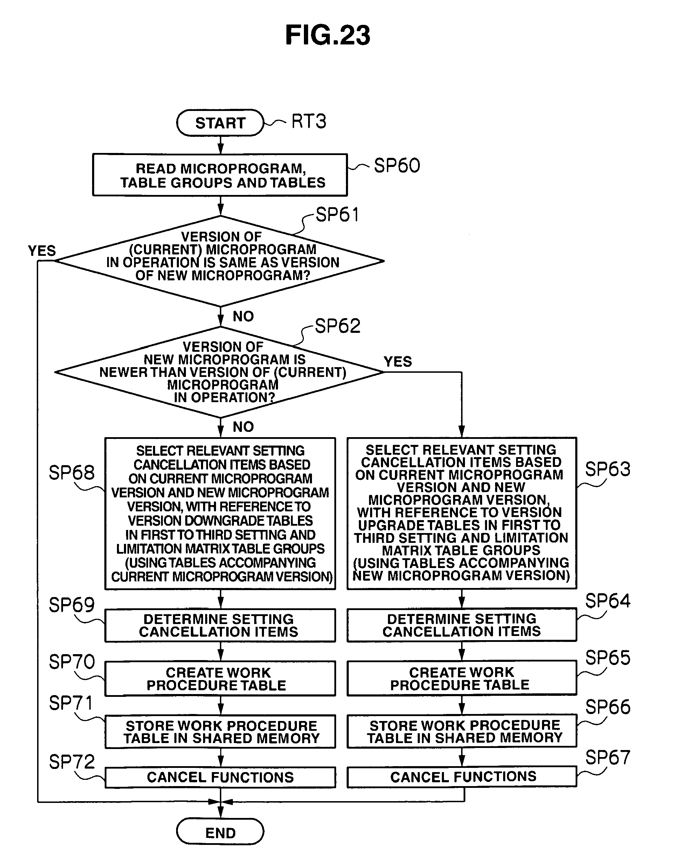

The secondary CPU 24B then blocks the channel adapters 11 and the disk adapter(s) 14 connected to the first path 26A according to the processor blocking processing shown in FIG. 23 to cancel the functions of the channel adapters 11 and disk adapter(s) 14 (SP34). The secondary CPU 24B, upon completion of the blocking of the channel adapters 11 and the disk adapter(s) 14, sends a notice of completion (hereinafter referred to as the "second preparation completion notice") to the primary CPU24A (SP35).

The primary CPU 24A, upon receipt of the second preparation completion notice from the secondary CPU 24B, sends a notice to start an update of the microprogram 31 (hereinafter referred to as the "microprogram update start instruction notice") to the secondary CPU 24B (SP36). The primary CPU 24A then updates the microprogram 31 for the channel adapters 11 and the disk adapter(s) 14 in the first storage apparatus 3A connected to the first path 26A (SP37). The primary CPU 24A, upon completion of the processing for updating the microprogram 31, executes the restore processing to restore the channel adapters 11 and the disk adapter(s) 14 blocked at step SP34 (i.e., re-activating them with the new microprogram) (SP38).

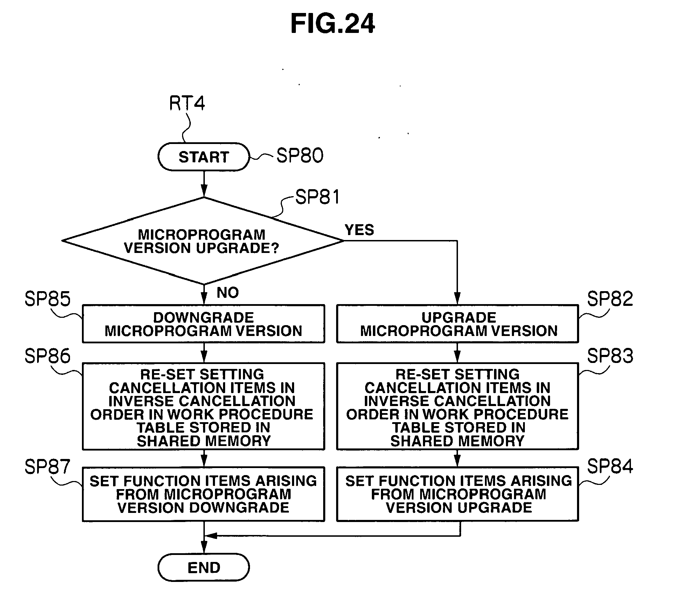

The secondary CPU 24B, upon receipt of the microprogram update start instruction notice from the primary CPU 24A, updates the microprogram 31 for the channel adapters 11 and the disk adapter(s) 14 in the second storage apparatus 3B connected to the first path 26A according to the flowchart shown in FIG. 24 (SP39).

Then, the secondary CPU 24B, upon completion of the processing for updating the microprogram 31, executes the restore processing for restoring the channel adapters 11 and the disk adapter(s) 14 blocked at step SP34 (SP40). The secondary CPU 24B, upon completion of the restore processing, sends a notice of completion (hereinafter referred to as the "restoration completion notice") to the primary CPU 24A (SP41).

The secondary CPU 24B then blocks the channel adapters 11 and the disk adapter(s) 14 in the second storage apparatus 3B connected to the second path 26B to cancel the functions of the channel adapters 11 and the disk adapter(s) 14 (SP42). The secondary CPU 24B, upon completion of the blocking of the channel adapters 11 and the disk adapter(s) 14, sends a notice of the completion (hereinafter referred to as the "third preparation completion notice") to the primary CPU 24A (SP43).

Meanwhile, the primary CPU 24A, upon receipt of the restoration completion notice from the secondary CPU 24B, starts the processing for blocking the channel adapters 11 and the disk adapter(s) 14 in the first storage apparatus 3A connected to the second path 26B (SP44) and blocks the channel adapters 11 and disk adapter(s) 14 to cancel their functions (SP45).

The primary CPU 24A, upon receipt of the third preparation completion notice from the secondary CPU 24B, sends a notice to start an update of the microprogram 31 (hereinafter referred to as the "microprogram update start instruction notice") to the secondary CPU 24B (SP46).

The primary CPU 24A executes the processing for updating the microprogram for the channel adapters 11 and the disk adapter(s) 14 in the first storage apparatus 3A connected to the second path 26B, according to the flowchart shown in FIG. 24 (SP47). The primary CPU 24A, upon completion of the microprogram 31 update processing, executes the restore processing for restoring the channel adapters 11 and the disk adapter(s) 14 blocked at step SP45 (i.e., re-activating them with the new microprogram) (SP48), and then terminates the second microprogram update processing.

Meanwhile, the secondary CPU 24B, upon receipt of a microprogram start instruction notice from the primary CPU 24A after sending the third preparation completion notice to the primary CPU 24A at step SP43, executes the processing for updating the microprogram for the channel adapters 11 and the disk adapter(s) 14 in the second storage apparatus 3B connected to the second path 26B, according to the flowchart shown in FIG. 24 (SP49). The secondary CPU 24B, upon completion of the microprogram 31 update processing, executes the restore processing for restoring the channel adapters 11 and the disk adapter(s) 14 blocked at step SP42 (i.e., re-activating them with the new microprogram) (SP50), and then terminates the second microprogram update processing.

FIG. 23 is a flowchart showing the specific content of the processing for blocking the channel adapters 11 and the disk adapter(s) 14 performed by the primary CPU 24A or the secondary CPU 24B at step SP33, SP34, SP42 or SP45 in the microprogram update processing according to the second embodiment.

The primary CPU 24A and the secondary CPU 24B, upon proceeding to step SP33, SP34, SP42 or SP45 in the microprogram update processing, starts the adapter blocking processing, and executes the processing in steps SP60 to step SP72 the same way as in steps SP1 to SP 9 and SP14 to SP18 of the microprogram update processing according to the first embodiment explained with reference to FIG. 19.

Meanwhile, FIG. 24 is a flowchart showing the specific content of the microprogram replacement processing performed by the primary CPU 24A or the secondary CPU 24B at step SP37, SP39, SP47 or SP49 in the microprogram update processing according to the second embodiment.

The primary CPU 24A and the secondary CPU 24B, upon proceeding to step SP37, SP39, SP47 or SP49 in the microprogram update processing, starts the microprogram replacement processing, and first judges whether or not the replacement of the current microprogram with the new microprogram is an version upgrade of the microprogram (SP81).

The primary CPU 24 A and the secondary CPU 24B, upon a negative result in this judgment, executes the subsequent steps SP85 to SP87 the same way as in steps SP10 to SP12 in the microprogram update processing according to the first embodiment explained with reference to FIG. 19, and then terminates the microprogram replacement processing.

The primary CPU 24A and the secondary CPU 24B, upon an affirmative result in this judgment, executes the subsequent steps SP82 to SP84 the same way as in steps SP19 to SP21 in the microprogram update processing according to the first embodiment, and then terminates the microprogram replacement processing.

### (2-3) Effect of this embodiment

As described above, in the storage system according to this embodiment, the first storage apparatus 3A and the second storage apparatus 3B are connected by connecting their first ports 29A via the first path 26A and also connecting their second ports 29B via the second path 26B, with each of the first and second paths 26A and 26B being formed from a cable or similar. Thus, when the microprogram for the channel adapter 11 and the disk adapter(s) 14 in the first storage apparatus 3A is updated during remote copy being conducted between the first storage apparatus 3A and the second storage apparatus 3B, the microprogram for the channel adapters 11 and the disk adapter(s) 14 in the second storage apparatus 3B will also be updated in line with the update in the first storage apparatus 3A. Also, while the microprogram in the second storage apparatus 3B is updated in association with the update of the microprogram in the first storage apparatus 3A, the microprogram 31 for the channel adapters 11 and the disk adapter(s) 14 in each of the first storage apparatus 3A and the second storage apparatus 3B connected to one of the paths can be updated while remote copy is being conducted via another path. Accordingly, the special advantage of updating the microprogram for the channel adapters 11 and the disk adapter(s) 14 in each of the first storage apparatus 3A and the second storage apparatus 3B without remote copy being interrupted can be obtained, in addition to the effect obtained with the storage system 1 according to the first embodiment.

### (3) Other embodiments

The above-described embodiments relate to the case where physical storage areas are provided by the disk drives 17. However, the present invention is not limited to that case, and semiconductor memory like flash memory may be used as storage devices.

The above-described embodiments relate to the case where each of the channel adapters 11 and the disk adapter(s) 14 has a processor to execute various processing according to the microprogram stored in a memory unit. However, the present invention is not limited to that case, and another processor may execute the same processing.

Furthermore, the above-described embodiments relate to the case where a microprogram is updated in the state where each of the channel adapters 11 and the disk adapter(s) 14 has one processor. However, the present invention is not limited to that case, and the microprogram update processing may be performed without data input/output being interrupted, by providing each of the channel adapters 11 and the disk adapter(s) 14 with a plurality of processors and sequentially changing the microprogram for the processors.

Furthermore, the above-described embodiments relate to the case where shared memory 13 is provided as a memory unit to store a microprogram. However, the present invention is not limited to that case, and other memory, such as memory 25 in the service processor 16, may be used as a memory unit to store the microprogram.

The above-described embodiments relate to the case where the service processor 16's CPU 24 is provided as a program update unit to update a program in response to an external instruction. However, the present invention is not limited to that case, and another CPU may be used to update the microprogram.

The present invention can be applied to a wide range of storage systems having storage apparatuses.

While the invention has been described with respect to a limited number of embodiments, those skilled in the art, having benefit of this disclosure, will appreciate that other embodiments can be devised which do not depart from the scope of the invention as disclosed herein. Accordingly, the scope of the invention should be limited only by the attached claims.

## Claims

1. A storage apparatus that executes processing based on a program, the storage apparatus comprising:
a memory unit that stores the program;
a processing unit that executes processing according to the program stored in the memory unit; and
a program update unit that updates the program to a new program according to an external instruction,
wherein the program update unit selects one or more setting cancellation items from a plurality of items for which the settings can be cancelled for the update of the program; determines the order for executing the processing for cancelling the settings for the one or more setting cancellation items; and after cancelling the one or more setting cancellation items in the determined order, executes processing for replacing the program with the new program; and after the processing for replacing the program with the new program, re-sets the settings for the one or more setting cancellation items in inverse order of their cancellation.

2. The storage apparatus according to claim 1, wherein after re-setting the settings for the one or more setting cancellation items in inverse order of their cancellation, the program update unit makes the settings for one or more new items arising from the update of the program.

3. The storage apparatus according to claim 1 or claim 2, wherein the program update unit selects the one or more setting cancellation items based on a first table externally provided together with the new program, that contains the plurality of items.

4. The storage apparatus according to any one of claims 1 to 3, wherein the program update unit determines the order for making the setting cancellation processing for cancelling the settings for the one or more setting cancellation items, based on a second table externally provided together with the new program, that provides the priority for cancelling the settings for the one or more setting cancellation items contained in the first table.

5. The storage apparatus according to any one of claims 1 to 4, comprising a plurality of the processing units connected to a same external apparatus via different paths, wherein after, for one or more processing units, from among the plurality of processing units, that are connected to each of the paths, sequentially blocking the one or more processing units connected to the relevant one of the paths, cancelling the settings for the one or more setting cancellation items, executing the processing for replacing the program with the new program, and executing the processing for cancelling the blocking of the one or more processing units, the program update unit re-sets the settings for the one or more setting cancellation items in inverse order of their cancellation.

6. The storage apparatus according to any one of claims 1 to 4, comprising a plurality of the processing units that execute the processing according to the program stored in the memory unit,
wherein for each of the processing units, the program update unit sequentially blocks the relevant one of the processing units after cancelling the settings for one or more setting cancellation items, executes the processing for replacing the program with the new program, and after the processing for cancelling the blocking of the processing unit, re-sets the settings for the one or more setting cancellation items in inverse order of their cancellation.

7. A program update method for updating a program in a storage apparatus that executes processing based on the program, the method comprising:
a first step of selecting one or more setting cancellation items from a plurality of items for which the settings can be cancelled for the update of the program; a second step of determining the order for executing processing for cancelling the settings for the one or more setting cancellation items;
a third step of cancelling the settings for the one or more setting cancellation items in the determined order;
a fourth step of executing replacement processing for replacing the program with a new program; and
a fifth step of, after executing the processing for replacing the program with the new program, re-setting the settings for the one or more setting cancellation items in inverse order of their cancellation.

8. The program update method according to claim 7, wherein the fifth step includes, after re-setting the settings for the one or more setting cancellation items in inverse order of their cancellation, executing the settings for one or more new items arising from the update of the program.

9. The program update method according to claim 7 or claim 8, wherein the first step includes selecting the one or more setting cancellation items based on a first table externally provided together with a new program, that contains the plurality of items.

10. The program update method according to any one of claims 7 to 9, wherein the second step includes determining the order for executing the setting cancellation processing for cancelling the settings for the one or more setting cancellation items, based on a second table externally provided together with the new program, that provides the priority for cancelling the settings for the one or more setting cancellation items contained in the first table.

11. The program update method according to any one of claims 7 to 10, wherein the storage apparatus has a plurality of processing units connected to a same external apparatus via different paths so that it can freely communicate with the external apparatus; and
the storage apparatus executes at least the third step and the fourth step for one or more processing units, from among the plurality of processing units, that are connected to each of the paths.

12. The program update method according to any one of claims 7 to 10, wherein the storage apparatus has a plurality of processing units that execute the processing based on the program; executes the first step to the fifth step for one of the processing units; and also executes at least the third step to the fifth step for one or more other processing units, from among the plurality of processing units, in turn.
